# FASCICULE DE BREVET EUROPEEN

(11) **EP 2 139 771 B1**
(45) Date de publication et mention de la délivrance du brevet: **19.12.2012**
(21) Numéro de dépôt: 07731417.7
(22) Date de dépôt: 04.05.2007
(51) Int. Cl.: B64F 1/36, G06K 7/10

(54) **SYSTÈME POUR LA DÉTECTION DU PASSAGE D'OBJETS PORTANT UNE ÉTIQUETTE RFID ET PROCÉDÉ UTILISANT UN TEL SYSTÈME**
SYSTEM ZUR ERFASSUNG DER PASSAGE VON OBJEKTEN MIT EINEM RFID-ETIKETT UND SOLCH EIN SYSTEM VERWENDENDES VERFAHREN
SYSTEM FOR DETECTING THE PASSAGE OF OBJECTS WITH A RFID LABEL AND METHOD USING SUCH SYSTEM

(30) Priorité: 23.03.2007 FR 0702111
(43) Date de publication de la demande: 06.01.2010
(73) Titulaire: I.E.R., 92150 Suresnes (FR)
(72) Inventeur: RUFFLE, Pascal, F-78690 Les Essarts Le Roi (FR); PIERRE, Philippe, F-93440 Dugny (FR)
(74) Mandataire: Pontet, Bernard
(86) Numéro de dépôt international: PCT/FR2007/000775
(87) Numéro de publication internationale: WO 2008/116976

(56) Documents cités:
- EP-A1- 0 962 407
- WO-A-03/034360
- WO-A-03/094288
- US-A1- 2005 140 511

## Description

La présente invention concerne un système pour la détection du passage d'objets, de personnes ou d'animaux portant une étiquette d'identification par fréquence radio (RFID).

L'invention vise également l'application du systèm selon l'invention à l'identification d'objets équipés d'étiquettes RFID, transportés sur un convoyeur.

Dans une application préférée de l'invention, les objets précités sont des bagages transportés vers un portique ou tunnel.

Dans cette application, les portiques ou tunnels sont équipés d'antennes rigides et fixes, reliées à un lecteur RFID qui permet de lire à distance les étiquettes fixées ou collées sur les bagages, en permettant ainsi d'identifier ceux-ci.

Les documents WO 03/034360 A, WO 03/094288 A, EP 0 962 407 A1 et US 2005/140511 A1 divulguent chacun un dispositif pour la détection du passage d'objets portant une étiquette d'identification par radiofréquences comprenant un support mobile comportant une antenne reliée électriquement à au moins un lecteur.

Cependant, les deux paramètres suivants agissent sur le lecteur des étiquettes.
- la distance entre les antennes et l'étiquette RFID
- l'orientation du plan de l'antenne par rapport au plan de l'étiquette

Si cette distance ou si cette orientation n'est pas optimale, l'objet, c'est-à-dire le bagage, risque d'échapper à la lecture et de ne pas être identifié.

Par ailleurs, les perturbations mutuelles entre plusieurs dispositifs de lecture ou écriture RFID peuvent également affecter le bon fonctionnement du système.

Le but de la présente invention est de remédier aux inconvénients ci-dessus.

Ce but est atteint, selon l'invention, grâce à un système pour la détection du passage d'objets, de personnes ou d'animaux portant une étiquette d'identification par fréquence radio (RFID) selon la revendication 1.

Ainsi, lorsque le support mobile est déplacé par les objets et autres, le pian de l'antenne portée par ce support change d'orientation par rapport à celui de l'étiquette RFID portée par les objets.

Les conditions de lecture de cette étiquette sont ainsi nettement améliorées par rapport aux dispositifs connus utilisant des antennes fixes.

Dans un exemple de réalisation de l'invention, le support mobile est rigide et est articulé suivant un axe situé au-dessus de la zone de passage.

Ainsi, le support mobile pivote lorsqu'il est rencontré par un objet.

Dans une version préférée de l'invention, le support mobile est en matière souple et est suspendu librement en un point situé au-dessus de la zone de passage.

Ainsi, le support mobile se plie lorsqu'il est rencontré par un objet, tout en restant en contact avec l'objet, jusqu'à ce que celui-ci, en poursuivant son déplacement, échappe complètement au support mobile. On obtient ainsi d'excellentes conditions de lecture de l'étiquette portée par les objets.

De préférence, l'antenne est située près de l'extrémité inférieure du support mobile pour être dans la zone de passage.

Ainsi, l'antenne est située près des objets à identifier, ce qui permet d'obtenir des conditions de lecture optimales.

Dans une version avantageuse de l'invention, le support comprend plusieurs bandes souples, disposées les unes à côté des autres, dans un plan transversal à la direction de passage desdits objets, personnes ou animaux, chacune desdites bandes portant, à sa partie inférieure, une antenne de lecture RFID.

Grâce à ces bandes souples juxtaposées, oh peut effectuer une lecture de plusieurs objets passant simultanément au travers du rideau souple constitué par les bandes ou d'objets situés en un point quelconque de la largeur de passage.

Cette disposition permet d'éviter tout risque qu'un objet ne soit pas identifié.

De préférence, les bandes souples s'étendent sur sensiblement toute la largeur du passage, et l'extrémité inférieure des bandes souples est située près de la base dudit passage.

Avantageusement, l'antenne est située sur la face de la bande opposée à celle venant en contact avec les objets. On évite ainsi tout risque de frottement entre l'objet et l'antenne qui pourrait détériorer celle-ci.

Les bandes du dispositif selon l'invention peuvent être en toute matière souple, telle que matière synthétique, caoutchouc ou textile.

L'antenne et le conducteur électrique relié à celle-ci, peuvent être constitués par un circuit imprimé sur la bande.

Chacun des supports mobiles portant une antenne, le système comprenant un lecteur pour les informations reçues par les antennes, ce système comprend un multiplexeur assurant une liaison entre les antennes et le lecteur. Ainsi, lorsque plusieurs objets franchissent sensiblement simultanément la barrière, ils peuvent être détectés et identifiés par des antennes respectives, sans perte d'information, les informations relatives à chacun des objets respectifs étant toutes lues par le lecteur.

Une unité centrale reliée au lecteur peut en outre être prévue pour assurer le traitement des informations lues par ledit lecteur. Avantageusement, le système inclut un ensemble de traitement comprenant le multiplexeur, le lecteur et l'unité centrale. Ledit ensemble peut être affecté localement au dispositif de détection. C'est-à-dire que chaque dispositif de détection est associé à un unique ensemble de traitement. L'ensemble de traitement peut être inclus dans un boîtier monté sur ledit, ou a proximité immédiate dudit, dispositif de détection.

Le système peut en outre comprendre des moyens de traitement centraux distants, adaptés pour traiter d'autres informations que celles issues de l'ensemble de traitement. Ainsi, le système peut comprendre plusieurs dispositifs de détection, ainsi qu'un ou plusieurs dispositifs de triage pour des objets, et les moyens de traitement centraux peuvent être adaptés pour trier un objet, notamment en fonction des informations recueillies lors du passage de l'objets au travers du ou des dispositif(s) de détection.

Le système peut être un système de tri de bagage à l'enregistrement ou lors d'un transit dans un aéroport. Il peut être aussi un système de tri postal.

Selon l'invention, un procédé utilisant un dispositif de détection selon l'invention, est caractérisé en ce que l'on interroge successivement chacune des antennes, de préférence à l'aide d'un multiplexeur assurant une liaison entre les antennes et le lecteur. L'interrogation successive est avantageusement menée à une fréquence, fonction de la vitesse d'avancement de l'objet, personne ou animal franchissant ladite barrière, de sorte que toute antenne qui détecterait la présence de l'objet, la personne ou l'animal soit interrogée au moins une fois durant le temps pendant lequel cette présence est détectée par cette antenne.

D'autres caractéristiques et avantages de l'invention apparaîtront encore dans la description ci-après.

Aux dessins annexés, donnés à titre d'exemples non limitatifs :
- la figure 1 est une vue latérale schématique d'un premier exemple de dispositif de détection de passage d'objets, selon l'invention,
- la figure 2 est une vue analogue à la figure 1 montrant un autre exemple du dispositif selon l'invention,
- la figure 3 est une vue en coupe transversale d'un tunnel de passage de bagages équipé d'un dispositif selon l'invention comportant plusieurs bandes souples,
- la figure 4 est une vue de l'une des bandes souples du dispositif de la figure 3.

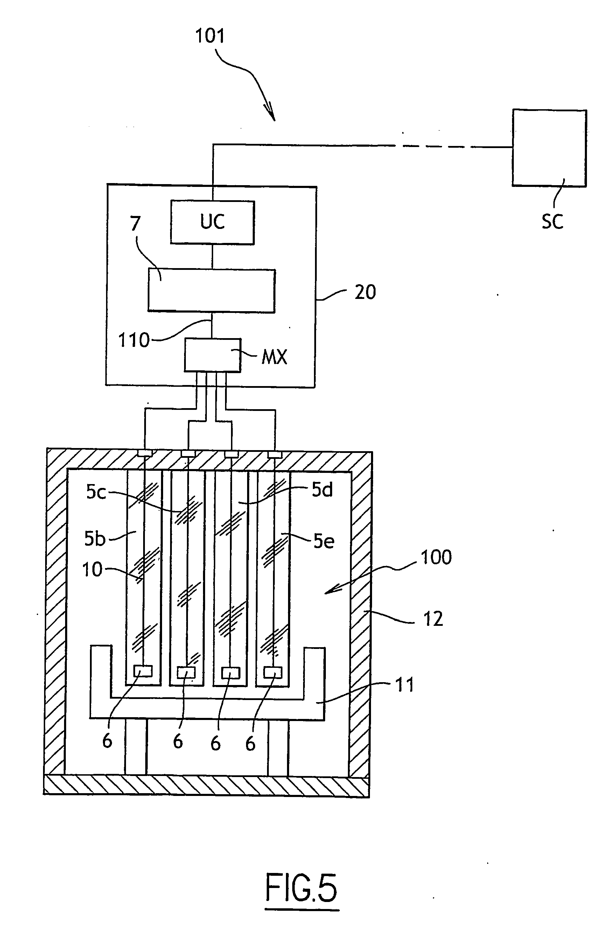

- la figure 5 est une vue schématique d'un système selon l'invention utilisant un dispositif selon l'invention.
- La figure 6 est une vue schématique d'une variante d'un système selon l'invention dans laquelle les supports mobiles sont des rideaux souples obturant une porte et s'ouvrant par pivotement autour d'un axe vertical.

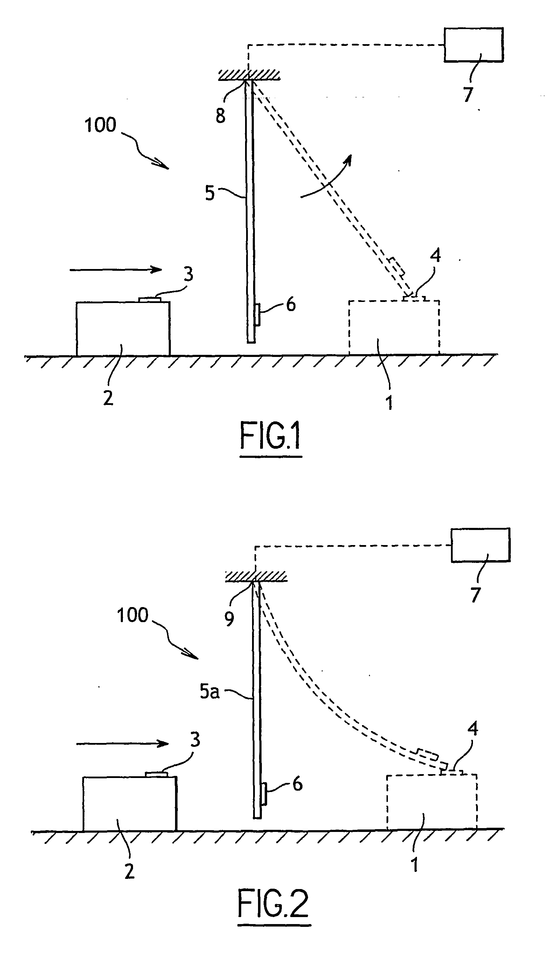

Comme illustré par les figures 1 et 2, le dispositif 100 pour la détection du passage d'objets 1, 2, portant une étiquette 3, 4 d'identification par fréquence radio (RFID), comprend au moins un support mobile 5, 5a qui, au repos, forme une barrière par rapport au passage desdits objets 1, 2, et qui, au contact avec ces derniers, est susceptible de se déplacer vers une position effacée (représentée en traits interrompus aux figures 1 et 2). Ce support mobile 5, 5a porte une antenne 6 reliée électriquement à un lecteur 7 d'étiquettes RFID.

Dans l'exemple de la figure 1, le support mobile est rigide et est articulé suivant un axe 8 situé au-dessus de la zone de passage des objets 1, 2.

Dans le cas de la figure 2, le support mobile 5a est en matière souple, et est suspendu librement en un point 9 situé au-dessus de la zone de passage des objets 1, 2.

Dans les deux cas, l'antenne 6 est située près de l'extrémité inférieure du support mobile 5, 5a pour être dans la zone de passage des objets 1, 2.

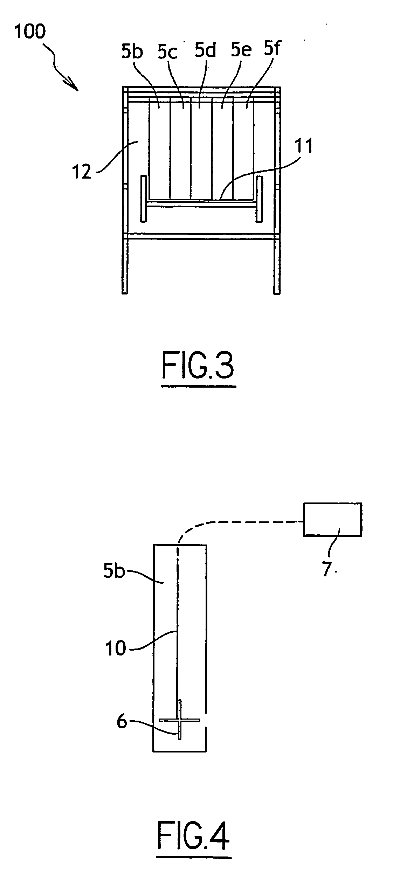

Dans la réalisation représentée sur la figure 3, le support comprend plusieurs bandes souples 5b, 5c, 5d, 5e 5f, disposées les unes à côté des autres, dans un plan transversal à la direction de passage des objets. Chacune des bandes 5b, 5c, 5d, 5e, 5f porte, à sa partie inférieure, une antenne 6 de lecture RFID.

Dans l'exemple de la figure 3, les bandes souples 5b, 5c, 5d, 5e, 5f s'étendent sur sensiblement toute la largeur du passage des objets, et l'extrémité inférieure des bandes souples 5b, 5c, 5d, 5e, 5f est située près de la base dudit passage.

De préférence, l'antenne 6 est située sur la face de la bande 5b, 5c, 5d, 5e, 5f, opposée à celle venant en contact avec les objets, pour éviter que ceux-ci détériorent cette antenne 6.

Les bandes 5b, 5c, 5d, 5e, 5f peuvent être réalisées en n'importe quelle matière synthétique ou textile, pourvu que celle-ci soit suffisamment souple pour pouvoir s'effacer au passage des objets.

L'antenne 6 et le conducteur électrique 10 relié à celle-ci, peuvent être constitués par un circuit électrique imprimé sur la bande 5b, 5c, 5d, 5e, 5f.

La figure 3 illustre une application du dispositif salon l'invention à l'identification d'objets équipés d'étiquettes RFID transportés sur un convoyeur 11.

Dans cette application, les objets à identifier peuvent être des bagages transportés dans un tunnel 12 (voir figure 3), tels que ceux installés dans les aéroports.

Dans l'application ci-dessus, le dispositif selon l'invention permet de tendre vers l'identification de 100 % des bagages transportés sur le convoyeur.

Ce résultat s'explique par le fait que les bandes souples 5b, 5c, 5d, 5e, 5f sont réparties sur toute la largeur du convoyeur et que les antennes 6 passent très près des objets 1, 2 et donc, des étiquettes RFID portés par ceux-ci.

On va maintenant décrire un système 101 selon l'invention, ce système incluant un dispositif de détection 100. Le dispositif 100 est sensiblement du même type que ceux déjà décrits en référence aux figures précédentes. On notera cependant que les quatre bandes 5b, 5e constituants la barrière ne sont pas jointives, ni en recouvrement, mais présentent entre elle des intervalles libres. Néanmoins, ces bandes sont suffisamment rapprochées pour qu'un objet franchissant le dispositif 100 soit efficacement détecté.

Le système 101 comprend en outre un ensemble de traitement 20, disposé localement relativement au dispositif de détection 100, et des moyens de traitement centraux SC distants relativement au dispositif de détection. L'ensemble de traitement comprend un multiplexeur MX, un lecteur 7 et une unité centrale UC.

Chacune des quatre bandes comprend, à sa base, une antenne 6 reliée par un conducteur 10 respectif au multiplexeur MX. L'information reçue par les antennes et ainsi multiplexée, est ensuite transmise via un conducteur unique 110 au lecteur 7, chargé de lire cette information. L'information est ensuite transmise à l'unité centrale UC en vue de son traitement local. L'information peut comprendre la destination d'un bagage qui vient d'être enregistré. Cette information, une fois traitée localement, peut ensuite être transmise en tout ou partie aux moyens de traitement centraux SC.

Les moyens de traitement centraux sont prévus pour exploiter les données du système au niveau d'un système de gestion central. Par exemple, les moyens de traitement centraux peuvent être prévus pour gérer un appareillage pour le tri de bagages. Ils peuvent être prévu notamment pour actionner des systèmes d'aiguillage pour les bagages et/ou pour vérifier que des bagages initialement enregistrés par un passager entrent dans et sortent effectivement de l'appareillage de tri.

Un procédé utilisant un tel système avec multiplexeur consiste à interroger successivement chacune des antennes du dispositif de détection. Ce balayage, est conduit à une fréquence calculée en fonction de la vitesse de franchissement du dispositif par les objets à identifier, de sorte que toute antenne qui détecterait un objet soit interrogée au moins une fois durant le temps pendant lequel la présence dudit objet est détectée par cette antenne. L'unité centrale est avantageusement configurée pour éviter une double détection, par exemple si lors de deux interrogations successives la même antenne détecte le même objet, ou lorsque deux antennes différentes détectent simultanément ou successivement le même objet.

Selon une variante, c'est le lecteur 7 lui-même qui peut comporter un algorithme de lecture des antennes détectant le signal de plus forte amplitude issu du multiplexeur, ce qui désigne ainsi l'antenne la mieux placée pour lire à un instant donné la ou les étiquettes située(s) sur les objets à contrôler. L'information issue de cette antenne est alors lue de façon complète et enregistrée par le lecteur pour être transmise au système de gestion central SC. Ensuite, le lecteur lit le nouveau signal de plus forte amplitude recueilli et lit l'information de la nouvelle antenne ainsi sélectionnée.

On notera qu'un dispositif selon l'invention est particulièrement avantageux au regard des dispositifs de l'art antérieur. Des études menées ont montré que dans un dispositif de l'art antérieur, le taux de lecture d'une étiquette RFID dans la position la plus défavorable est en moyenne de 71,3%, alors que dans un dispositif selon l'invention, comportant des antennes sur des bandes souples, le taux de lecture est de 93,6%. Dans l'exemple illustré, on entend par position la plus défavorable, le cas où l'étiquette est située sous l'objet , au contact du convoyeur et proche des matériaux métalliques de ce dernier.

Si on prend en compte l'ensemble des positions possibles des étiquettes RFID sur un bagage, y compris la position la plus défavorable mentionnée ci-dessus, le dispositif selon l'invention permet de reconnaître 99,98% des bagages passant devant les antennes du dispositif selon l'invention.

Bien entendu, l'invention n'est pas limitée aux exemples que l'on vient de décrire et peut s'appliquer à l'identification de tout type d'objets, quel que soit le moyen de transport de ceux-ci.

L'invention peut également s'appliquer à l'identification de personnes ou d'animaux traversant une porte d'accès ou un portique.

En outre, un dispositif de détection selon l'invention peut ne pas comprendre d'antenne sur chacun des support mobiles, mais suffisamment pour une détection efficace des objets, personnes ou animaux qui le franchissent.

Bien sûr, le dispositif de détection selon l'invention peut en outre comprendre une ou plusieurs antennes portées par des parties fixes, qui peuvent elles aussi être multiplexées avec les antennes portées par les supports mobiles. Notamment, les antennes fixes peuvent être disposées en dessous relativement aux objets franchissant le dispositif, améliorant ainsi la détection des étiquettes RFID qui seraient positionnées sous les objets.

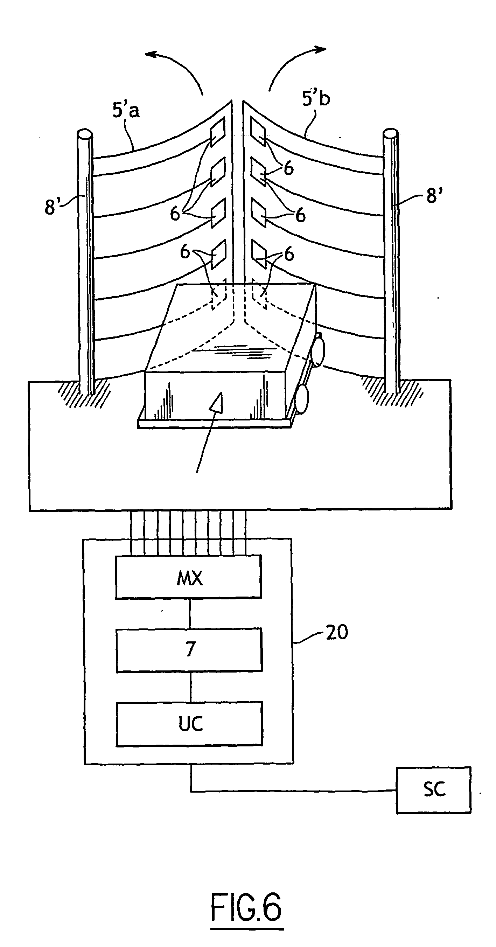

On comprendra également à la lecture de la figure 6,que les antennes peuvent être placées à divers endroits des supports mobiles, rigides ou souples.

Ainsi, dans le cas de supports 5' orientables autour d'axes verticaux, les antennes 6 peuvent être disposées verticalement les unes en dessous des autres vers l'extrémité libre du support 5', mobile autour d'un axe vertical 8', ainsi que le montre la figure 6. Mais les antennes peuvent également, et sans sortir du cadre de l'invention , être disposées de façon ordonnée ou aléatoire sur l'ensemble de la surface du support mobile selon le lieu et les objets auxquels on applique l'invention. Ces diverses dispositions permettent d'appliquer l'invention au contrôle du contenu de palettes, de cartons en transit dans une porte séparant deux locaux de stockage. On pourra ainsi lire des étiquettes RFID attachées à des objets disposés à l'intérieur de cartons empilés sur une palette ou une remorque, au moyen des antennes régulièrement espacées verticalement sur les rideaux mobiles de la porte, cette dernière s'ouvrant au passage de la palette ou de la remorque.

Une des applications importantes de la présente invention est de permettre d'insérer un rideau selon l'invention dans un tunnel de tri existant, sans avoir à apporter de modifications substantielles au système de convoyage, afin de permettre un contrôle RFID des objets placés sur le convoyeur du tunnel. En effet, l'introduction des systèmes actuels d'antennes RFID placés le long des parois d'un tunnel de tri existant, nécessite de remplacer la totalité des parties métalliques du tunnel et du convoyeur au droit de la zone des antennes par des pièces plastiques pour ne pas parasiter la lecture des antennes. En plaçant les antennes RFID sur un support mobile transversal au sens de convoyage, ainsi que le prévoit l'invention, les modifications du convoyeur sont minimes et de faible coût pour l'opérateur.

En outre, le nombre de supports mobiles, par exemple de bandes souples, peut varier. Ainsi, peut n'y avoir qu'un seul support.

## Revendications

1. Système (101) pour la détection du passage d'objets (1, 2), de personnes ou d'animaux portant une étiquette (3, 4) d'identification par fréquence radio comprenant :
- au moins un dispositif de détection (100) comprenant plusieurs supports mobiles (5b, 5e) qui, au repos, forment une barrière par rapport au passage desdits objets (1, 2), personnes ou animaux, et qui, au contact avec ces derniers, sont susceptibles de se déplacer vers une position effacée, chacun de ces supports mobiles (5b, 5e) portant une antenne (6) ;
- un lecteur (7), relié électriquement audites antennes (6), pour les informations reçues par les antennes ;
- un multiplexeur (MX) assurant une liaison entre les antennes (6) et le lecteur (7).
**caractérisé en ce que** le lecteur (7) comporte un algorithme de lecture des antennes (6), détectant le signal de plus forte amplitude issu du multiplexeur (MX), désignant ainsi l'antenne (6) la mieux placée pour lire à un instant donné la (les) étiquette(s) située(s) sur les objets (1, 2) à contrôler.

2. Système selon la revendication 1, **caractérisé en ce qu'**au moins un support mobile (5) est rigide et est articulé suivant un axe (8) situé au-dessus de la zone de passage.

3. Système selon la revendication 1, **caractérisé en ce qu'**au moins un support mobile (5') est rigide et est articulé librement suivant un axe (8') disposé verticalement sur le côté de la zone de passage.

4. Système selon la revendication 1, **caractérisé en ce qu'**au moins un support mobile (5a) est en matière souple et est suspendu librement en un point (9) situé au-dessus de la zone de passage.

5. Système selon la revendication 1, **caractérisé en ce qu'**au moins un support mobile (5'a, 5'b) est souple et est articulé librement suivant un axe (8') disposé verticalement sur le côté de la zone de passage.

6. Système selon l'une des revendications 2 ou 4, **caractérisé en ce qu'**au moins une antenne (6) est située près de l'extrémité inférieure d'un-support mobile (5b, 5c, 5d, 5e) pour être dans la zone de passage.

7. Système selon l'une quelconque des revendications 3 ou 5, **caractérisé en ce qu'**il comporte une pluralité d'antennes (6) disposées sur l'ensemble de la surface d'un support mobile (5'a, 5'b)

8. Système selon la revendication 7, **caractérisé en ce que** chaque support mobile (5'a, 5'b) comporte une pluralité d'antennes disposées verticalement vers l'extrémité libre du support mobile.

9. Système selon l'une des revendications 4 ou 5, **caractérisé en ce qu'**au moins un support comprend une ou plusieurs bandes souples (5, 5a, 5b, 5c, 5d, 5e, 5f), disposées, les unes à côté des autres, dans un plan transversal à la direction du passage desdits objets, personnes ou animaux, chacune desdites bandes (5, 5a, 5b, 5c, 5d, 5e, 5f) portant une antenne (6) de lecture radiofréquence.

10. Système selon la revendication 9, **caractérisé en ce que** la ou les bandes souples (5, 5a, 5b, 5c, 5d, 5e, 5f) s'étendent sur sensiblement toute la largeur du passage.

11. Système selon l'une des revendications 2 ou 3 ou 4 et 9 ou 10, **caractérisé en ce que** l'extrémité inférieure des bandes souples (5, 5a, 5b, 5c, 5d, 5e, 5f) est située près de la base dudit passage.

12. Système selon l'une des revendications 9 à 11, **caractérisé en ce que** l'antenne (6) est située sur la face de la bande opposée à celle venant en contact avec les objets.

13. Système selon l'une des revendications 9 à 12, **caractérisé en ce que** lesdites bandes sont en matière synthétique ou textile.

14. Système selon l'une des revendications 9 ou 13, **caractérisé en ce que** l'antenne (6) et un conducteur électrique (10) relié à celle-ci, forment un circuit électrique réalisé à l'aide de matériaux propres à assurer la fonction d'antenne et de conducteur électrique eux-mêmes fixés sur les bandes (5, 5a, 5b, 5c, 5d, 5e, 5f).

15. Système selon l'une quelconque des revendications précédentes, **caractérisé en ce qu'**il comprend en outre une unité centrale (UC) reliée au lecteur (7), pour le traitement des informations lues par ledit lecteur (7).

16. Système selon la revendication 15, **caractérisé en ce qu'**il comprend un ensemble de traitement (20) comprenant le multiplexeur (MX), le lecteur (7) et l'unité centrale (UC), ledit ensemble (20) étant affecté localement au dispositif de détection.

17. Système selon la revendication 16, **caractérisé en ce qu'**il comprend en outre des moyens de traitement centraux distants, adaptés pour traiter d'autres informations que celles issues de l'ensemble de traitement (20).

18. Utilisation du système selon l'une quelconque des revendications précédentes, à l'identification d'objets équipés d'étiquettes radiofréquences transportés sur un convoyeur (11).

19. Utilisation selon la revendication 18, **caractérisée en ce que** lesdits objets sont des bagages transportés dans un tunnel (12).

20. Utilisation du système selon l'une des revendications 1 à 17, à l'identification d'objets équipés d'étiquettes radiofréquences, **caractérisé en ce que** lesdits objets sont des bagages transportés sur une palette ou un véhicule, le système comprenant des volets d'axe vertical s'effaçant en rotation latéralement au passage des objets.

21. Procédé pour la détection du passage d'objets (1, 2), de personnes ou d'animaux portant une étiquette (3, 4) d'identification par fréquence radio, dans lequel on utilise un système qui comprend au moins plusieurs supports mobiles (5b-5e) qui, au repos, forment une barrière par rapport au passage desdits objets (1, 2), personnes ou animaux, et qui, au contact avec ces derniers, est susceptible de se déplacer vers une position effacée, chaque support mobile (5b-5e) portant une antenne (6) respective, ledit système comprenant en outre un lecteur (7) pour les informations reçues par les antennes et un multiplexeur (MX) assurant une liaison entre les antennes (6) et le lecteur (7) ;
ledit procédé étant **caractérisé en ce que** l'on interroge successivement chacune des antennes (6) et que l'on détecte le signal de plus forte amplitude issu du multiplexeur (MX), désignant ainsi l'antenne (6) la mieux placée pour lire à un instant donné la (les) étiquette(s) située(s) sur les objets (1,2) à contrôler.

22. Procédé selon la revendication 21, **caractérisé en ce que** l'interrogation successive est menée à une fréquence, fonction de la vitesse d'avancement de l'objet (1, 2), personne ou animal franchissant ladite barrière, de sorte que toute antenne qui détecterait la présence de l'objet, la personne ou l'animal soit interrogée au moins une fois durant le temps pendant lequel ladite présence est détectée par ladite antenne.

## Claims

1. A system (101) for the detection of the passage of objects (1,2), people or animals bearing a radio frequency identification tag (3,4), comprising:
- at least one detection device (100) comprising several mobile supports (5b,5e) which, when at rest, form a barrier to the passage of said objects (1,2), people or animals and which, when in contact with the latter, are capable of moving towards a withdrawn position, each of these mobile supports (5b,5e) bearing an antenna (6),
- a reader (7), electrically connected to said antennas (6), for the information received by the antennas, and
- a multiplexer (MX) ensuring a connection between said antennas (6) and the reader (7);
**characterized in that** the reader (7) includes an algorithm for reading the antennas (6), detecting the signal with the highest amplitude coming from the multiplexer (MX), thus designating the antenna (6) which is best placed at a given moment to read the tag(s) located on the objects (1,2) to be checked.

2. The system according to claim 1, **characterized in that** at least one mobile support (5) is rigid and is articulated about an axis (8) located above the passage zone.

3. The system according to claim 1, **characterized in that** at least one mobile support (5') is rigid and is articulated freely about an axis (8`) positioned vertically on a side of the passage zone.

4. The system according to claim 1, **characterized in that** the at least one mobile support (5a) consists of flexible material and is suspended freely at a point (9) located above the passage zone.

5. The system according to claim 1, **characterized in that** the at least one mobile support (5`a, 5'b) is flexible and is articulated freely about an axis (8') positioned vertically on the side of a passage zone.

6. The system according to one of the claims 2 or 4, **characterized in that** at least one antenna (6) is located close to a lower end of the mobile support (5b, 5c, 5d, 5e) so as to be in the passage zone.

7. The system according to anyone of the claim 3 or 5, **characterized in that** it includes a plurality of antennae (6) positioned over an entire surface of a mobile support (5'a, 5'b).

8. The system according to claim 7, **characterized in that** each mobile support (5`a, 5`b) includes a plurality of antennae positioned vertically towards a free end of the mobile support.

9. The system according to one of the claims 4 or 5, **characterized in that** at least one support comprises one or more flexible strips (5,5a,5b,5c,5d,5e, 5f) positioned, one beside the other, in a plane transverse to the direction of the passage of said objects, people or animals, each of said strips (5,5a,5b,5c,5d,5e, 5f) bearing a radiofrequency reading antenna (6).

10. The system according to claim 9, **characterized in that** the flexible strip(s) (5,5a,5b,5c,5d,5e, 5f) extend over substantially an entire width of the passage.

11. The system according to one of the claims 2 or 3 or 4 and 9 or 10, **characterized in that** a lower end of the flexible strips (5, 5a, 5b, 5c, 5d, 5e, 5f) is located close to a bottom of said passage.

12. The system according to one of the claims 9 to 11, **characterized in that** the antenna (6) is located on a side of the strip opposite to a side coming into contact with the objects.

13. The system according to one of the claims 9 to 12, **characterized in that** said strips are made of synthetic or fabric material.

14. The system according to one of the claims 9 to 13, **characterized in that** the antenna (6) and an electrical conductor (10) connected to the antenna, form an electrical circuit produced using materials appropriate for ensuring the antenna and electrical conductor functions and which are themselves fixed on the strips (5,5a,5b,5c,5d,5e, 5f).

15. The system according to anyone of the preceding claims, **characterized in that** it moreover comprises a central unit (UC) connected to the reader (7), for processing the information read by said reader (7).

16. The system according to claim 15, **characterized in that** it comprises a processing assembly (20) comprising the multiplexer (MX), the reader (7) and the central unit (UC), said assembly (20) being allocated locally to said device.

17. The system according to claim 16, **characterized in that** it moreover comprises remote central processing means, suitable for processing information other than that coming from the processing assembly (20).

18. A use of the system according to anyone of the preceding claims, to identify objects fitted with radiofrequency tags transported on a conveyor (11).

19. The use according to claim 18, **characterized in that** said objects are pieces of baggage transported in a tunnel (12).

20. A use of the system according to anyone of the claims 1 to 17 to identify objects fitted with radiofrequency tags, **characterized in that** said objects are pieces of baggage transported on a pallet or a vehicle, the system comprising flaps with a vertical axis withdrawing laterally in rotation when the objects pass.

21. A method for the detection of the passage of objects (1,2), people or animals bearing a radio frequency identification tag (3,4), in which a system is used which comprises at least several mobile supports (5b,5e) which, when at rest, form a barrier to the passage of said objects (1,2), people or animals and which, when in contact with the latter, is capable of moving towards a withdrawn position, each mobile support (5b,5e) bearing a respective antenna (6), said system moreover comprising a reader (7) for the information received by the antennae, and a multiplexer (MX) ensuring a connection between the antennae (6) and the reader (7);
said method being **characterized in that** each of the antennae (6) is interrogated in succession to detect the signal with the highest amplitude coming from the multiplexer (MX), thus designating the antenna (6) which is best placed at a given moment to read the tag(s) located on the objects (1,2) to be checked.

22. The method according to claim 21, **characterized in that** the successive interrogation is carried out at such a frequency, depending on the speed of the progress of the object (1, 2), person or animal crossing said barrier, that any antenna detecting the presence of the object, person or animal is interrogated at least once during the time for which said presence is detected by said antenna.

## Patentansprüche

1. System (101) zur Erfassung des Durchgangs von Objekten (1, 2), Personen oder Tieren, die ein Label (3, 4) zur Radiofrequenz-Identifikation tragen, umfassend:
- wenigstens eine Erfassungsvorrichtung (100), die mehrere bewegliche Träger (5b, 5e) umfasst, welche in Ruhe eine Barriere gegenüber dem Durchgang der Objekte (1, 2), Personen oder Tiere bilden und welche bei Kontakt mit letzteren geeignet sind, sich in eine Ausweichposition zu bewegen, wobei ein jeder dieser beweglichen Träger (5b, 5e) eine Antenne (6) trägt;
- ein mit den Antennen (6) elektrisch verbundenes Lesegerät (7) für die durch die Antennen empfangenen Informationen;
- einen Multiplexer (MX), der eine Verbindung zwischen den Antennen (6) und dem Lesegerät (7) sicherstellt,
**dadurch gekennzeichnet, dass** das Lesegerät (7) einen Algorithmus zum Auslesen der Antennen (6) umfasst, der das Signal mit der stärksten Amplitude aus dem Multiplexer (MX) erfasst, wodurch die Antenne (6) bestimmt wird, die am besten platziert ist, um zu einem gegebenen Zeitpunkt das (die) an den zu kontrollierenden Objekten (1, 2) befindliche(n) Label auszulesen.

2. System nach Anspruch 1, **dadurch gekennzeichnet, dass** wenigstens ein beweglicher Träger (5) starr ist und um eine oberhalb des Durchgangsbereichs befindliche Achse (8) angelenkt ist.

3. System nach Anspruch 1, **dadurch gekennzeichnet, dass** wenigstens ein beweglicher Träger (5') starr ist und um eine Achse (8'), die an der Seite des Durchgangsbereichs vertikal angeordnet ist, frei angelenkt ist.

4. System nach Anspruch 1, **dadurch gekennzeichnet, dass** wenigstens ein beweglicher Träger (5a) aus flexiblem Material besteht und an einer oberhalb des Durchgangsbereichs befindlichen Stelle (9) frei aufgehängt ist.

5. System nach Anspruch 1, **dadurch gekennzeichnet, dass** wenigstens ein beweglicher Träger (5'a, 5'b) flexibel ist und um eine Achse (8'), die an der Seite des Durchgangsbereichs vertikal angeordnet ist, frei angelenkt ist.

6. System nach einem der Ansprüche 2 oder 4, **dadurch gekennzeichnet, dass** sich wenigstens eine Antenne (6) nahe dem unteren Ende eines beweglichen Trägers (5b, 5c, 5d, 5e) befindet, um in dem Durchgangsbereich zu sein.

7. System nach einem der Ansprüche 3 oder 5, **dadurch gekennzeichnet, dass** es eine Vielzahl von Antennen (6) umfasst, die auf der gesamten Fläche eines beweglichen Trägers (5'a, 5'b) angeordnet sind.

8. System nach Anspruch 7, **dadurch gekennzeichnet, dass** jeder bewegliche Träger (5'a, 5'b) eine Vielzahl von Antennen umfasst, die zum freien Ende des beweglichen Trägers vertikal angeordnet sind.

9. System nach einem der Ansprüche 4 oder 5, **dadurch gekennzeichnet, dass** wenigstens ein Träger einen oder mehrere flexible Streifen (5, 5a, 5b, 5c, 5d, 5e, 5f) umfasst, die nebeneinander in einer Ebene quer zu der Richtung des Durchgangs der Objekte, Personen oder Tiere angeordnet sind, wobei ein jeder der Streifen (5, 5a, 5b, 5c, 5d, 5e, 5f) eine Radiofrequenz-Lese-Antenne (6) trägt.

10. System nach Anspruch 9, **dadurch gekennzeichnet, dass** der oder die flexible(n) Streifen (5, 5a, 5b, 5c, 5d, 5e, 5f) sich über im Wesentlichen die gesamte Breite des Durchgangs erstrecken.

11. System nach einem der Ansprüche 2 oder 3 oder 4 und 9 oder 10, **dadurch gekennzeichnet, dass** das untere Ende der flexiblen Streifen (5, 5a, 5b, 5c, 5d, 5e, 5f) nahe der Basis des Durchgangs gelegen ist.

12. System nach einem der Ansprüche 9 bis 11, **dadurch gekennzeichnet, dass** die Antenne (6) sich auf der Seite des Streifens befindet, die von derjenigen abgewandt ist, welche mit den Objekten in Kontakt gelangt.

13. System nach einem der Ansprüche 9 bis 12, **dadurch gekennzeichnet, dass** die Streifen aus Kunststoff oder Textil bestehen.

14. System nach einem der Ansprüche 9 oder 13, **dadurch gekennzeichnet, dass** die Antenne (6) und ein mit dieser verbundener elektrischer Leiter (10) eine elektrische Schaltung bilden, die mit Hilfe von Materialien ausgebildet ist, welche geeignet sind, die Funktion von Antenne und elektrischem Leiter sicherzustellen, die selbst auf den Streifen (5, 5a, 5b, 5c, 5d, 5e, 5f) befestigt sind.

15. System nach einem der vorhergehenden Ansprüche, **dadurch gekennzeichnet, dass** es ferner eine mit dem Lesegerät (7) verbundene Zentraleinheit (CU) für die Verarbeitung der durch das Lesegerät (7) ausgelesenen Informationen umfasst.

16. System nach Anspruch 15, **dadurch gekennzeichnet, dass** es eine Verarbeitungseinheit (20) aufweist, welche den Multiplexer (MX), das Lesegerät (7) und die Zentraleinheit (CU) umfasst, wobei die Einheit (20) örtlich der Erfassungsvorrichtung zugeordnet ist.

17. System nach Anspruch 16, **dadurch gekennzeichnet, dass** es ferner entfernte zentrale Verarbeitungsmittel umfasst, die dazu ausgelegt sind, andere Informationen als die aus der Verarbeitungseinheit (20) stammenden zu verarbeiten.

18. Verwendung des Systems nach einem der vorhergehenden Ansprüche, für die Identifikation von mit Radiofrequenz-Labeln versehenen Objekten, die auf einer Fördereinrichtung (11) transportiert werden.

19. Verwendung nach Anspruch 18, **dadurch gekennzeichnet, dass** die Objekte in einem Tunnel (12) beförderte Gepäckstücke sind.

20. Verwendung des Systems nach einem der Ansprüche 1 bis 17, für die Identifikation von mit Radiofrequenz-Labeln versehenen Objekten, **dadurch gekennzeichnet, dass** die Objekte auf einer Palette oder einem Fahrzeug transportierte Gepäckstücke sind, wobei das System Klappen mit vertikaler Achse umfasst, die beim Durchgang der Objekte seitlich drehend ausweichen.

21. Verfahren zur Erfassung des Durchgangs von Objekten (1, 2), Personen oder Tieren, die ein Label (3, 4) zur Radiofrequenz-Identifikation tragen, bei dem ein System verwendet wird, das wenigstens mehrere bewegliche Träger (5b-5e) umfasst, welche in Ruhe eine Barriere gegenüber dem Durchgang der Objekte (1, 2), Personen oder Tiere bilden und welche bei Kontakt mit letzteren geeignet sind, sich in eine Ausweichposition zu bewegen, wobei jeder bewegliche Träger (5b-5e) eine jeweilige Antenne (6) trägt, wobei das System ferner ein Lesegerät (7) für die durch die Antennen empfangenen Informationen sowie einen Multiplexer (MX), der eine Verbindung zwischen den Antennen (6) und dem Lesegerät (7) sicherstellt, umfasst;
wobei das Verfahren **dadurch gekennzeichnet ist, dass** eine jede der Antennen (6) nacheinander abgefragt wird und dass das Signal mit der stärksten Amplitude aus dem Multiplexer (MX) erfasst wird, wodurch die Antenne (6) bestimmt wird, die am besten platziert ist, um zu einem gegebenen Zeitpunkt das (die) an den zu kontrollierenden Objekten (1, 2) befindliche(n) Label auszulesen.

22. Verfahren nach Anspruch 21, **dadurch gekennzeichnet, dass** das sukzessive Abfragen mit einer Frequenz durchgeführt wird, die von der Vorrückgeschwindigkeit des Objektes (1, 2), der Person oder des Tieres, das/die die Barriere überschreitet, abhängt, so dass jede Antenne, die das Vorliegen des Objektes, der Person oder des Tieres erfassen würde, während der Zeit, in der das Vorliegen durch die Antenne erfasst wird, wenigstens einmal abgefragt wird.
